# EUROPEAN PATENT APPLICATION

(11) **EP 2 221 922 A1**
(43) Date of publication of application: **25.08.2010**
(21) Application number: 10250287.9
(22) Date of filing: 18.02.2010
(51) Int. Cl.: H01Q 15/00, H01Q 17/00, H01Q 1/22, G06K 7/08

(54) **Radiation attenuation**

(30) Priority: 23.02.2009 GB 0902952
(71) Applicant: QinetiQ Limited, London, SW1E 6PD (GB)
(72) Inventor: Fixter, Greg Peter Wade, Farnborough Hampshire GU14 0LX (GB); Spooner, Christopher Doulgas James, Farnborough Hampshire GU14 0LX (GB); Steele, David Thomas, Farnborough Hampshire GU14 0LX (GB); Perry, Christopher James, Farnborough Hampshire GU14 0LX (GB)
(74) Representative: Northway, Daniel Robert

(57) **Abstract**

A device for attenuating electromagnetic radiation in a desired transmission frequency band. The device includes a generally planar substrate (212), and a resistive pattern (214) arranged on the substrate adapted to reflect a proportion of incident radiation in the transmission band. The resistive pattern may be screen printed using carbon based ink. This provides a simple, cheap and easy to fabricate device which can quickly and easily be affixed to the exterior of an antenna (206) or antenna housing (204) to attenuate the power of radiation in the transmission band, resulting in reduced range or sensitivity.

## Description

The present invention relates to radiation transmission systems and methods, and particularly, but not exclusively, to filtering or attenuation of radio frequency identification (RFID) reader antennas.

Advances in RFID tag design, and in particular the design of passive tags has resulted in read ranges in excess of 5m being obtainable. In certain applications however, it is desired to have a limited read range of less than a metre for example.

It has been proposed to insert a 'Pad' attenuator into the transmission line that feeds the antenna which absorbs part of the signal before it reaches the antenna. Typically however, in order to insert the pad into the existing antenna the outer casing needs to be opened, typically invalidating the warranty on the antenna assembly. An alternative approach to reduce read range is to insert a thick piece of composite (40mm thick) into the near field of the antenna. This solution is bulky and ungainly however.

It is an object of the present invention to provide improved methods and apparatus for radiation attenuation.

According to a first aspect of the invention there is provided a device for attenuating electromagnetic radiation in a frequency band in which transmission is desired comprising a generally planar substrate, and a resistive pattern arranged on said substrate, said resistive pattern adapted to reflect a proportion of incident radiation in said desired transmission band.

This aspect of the invention affords a simple, cheap and easy to fabricate device which can quickly and easily be affixed to the exterior of an antenna or antenna housing to attenuate the transmission power of radiation in the frequency range in which transmission is desired. The proportion of power in the desired transmission band which is not reflected, and which is transmitted through the resistive pattern can continue to serve a desired purpose, albeit with modified properties, preferably range or sensitivity.

Embodiments in which the transmission band is within the radio frequency range can advantageously be used to reduce the read range of RFID reader devices. Certain embodiments will therefore be arranged such that the transmission band includes a standardised RFID frequency range, most commonly within the range 0.8 to 1 GHz. Conversely, input power received by the antenna will be similarly attenuated. Preferably the device produces substantially uniform attenuation across the desired transmission band.

The device preferably provides greater than or equal to 1 dB attenuation in certain embodiments, more preferably greater than or equal to 3dB attenuation, or even 5dB. The device also preferably provides less than or equal to 10dB attenuation, and more preferably less than or equal to 8dB attenuation.

This aspect of the invention affords the advantage that little or no skill is required to apply the device to an antenna, and the antenna housing does not need to be opened. Furthermore the device can be fitted temporarily, and quickly and simply removed again if desired. This may be achieved by the provision of a releasable fastening arrangement for example.

The resistive pattern in one embodiment is carbon based, and can be formed by printing carbon based ink onto said substrate. A grid pattern of intersecting lines is suitable as a resistive pattern in many embodiments. Desirably the surface resistance of said resistive pattern is substantially 70 Ohms/square.

The device thickness is less than or equal to 1 mm, or even 0.2mm in certain embodiments, and the substrate and said conductive pattern are flexible in some embodiments. Preferably the device has an area less than or equal to 1000cm²

A second aspect of the invention provides a method for attenuating an antenna producing radiation in a defined frequency band, said method comprising providing a patterned resistive element adapted to reflect a proportion of incident radiation in the defined frequency band, and locating said element adjacent to said antenna so as to allow a controlled proportion of radiation in said defined band to be transmitted beyond said element.

A simple and effective method of controlling the output of the antenna is therefore provided. In embodiments where the antenna includes an outer housing, the patterned resistive element can be located or applied directly on said housing, e.g. by patterned printing on the housing. Alternatively the resistive element may be provided on a dedicated substrate or backing, and the substrate or backing is applied or affixed over the antenna, typically to the housing. Preferably the patterned resistive element is located so as to intercept the main lobe of the beam pattern of said antenna.

A third aspect of the invention provides apparatus comprising an antenna for producing electromagnetic radiation to be transmitted in a desired transmission band, and a substantially planar attenuator comprising a resistive pattern arranged adjacent to said antenna such that radiation in said desired transmission band is incident thereon, and wherein said resistive pattern is adapted to reflect a proportion of said incident radiation in said desired transmission band.

In certain embodiments the resistive pattern is located within the near field of said antenna, preferably located within one wavelength of the frequency of operation (which may be taken as the centre frequency of the transmission band). More preferably the resistive pattern is located less than or equal to 100mm from said antenna.

This aspect of the invention can advantageously be embodied in an RFID reader apparatus including an antenna emitting radiation at a selected standardised RFID frequency, and a planar attenuator adapted to reflect a proportion of the energy emitted at that RFID frequency, so as to reduce the read range of the antenna.

The invention extends to methods, apparatus and/or use substantially as herein described with reference to the accompanying drawings.

Any feature in one aspect of the invention may be applied to other aspects of the invention, in any appropriate combination. In particular, method aspects may be applied to apparatus aspects, and vice versa.

Furthermore, features implemented in hardware may generally be implemented in software, and vice versa. Any reference to software and hardware features herein should be construed accordingly.

Preferred features of the present invention will now be described, purely by way of example, with reference to the accompanying drawings, in which:
Figure 1 illustrates a resistive pattern for use in an embodiment of the invention.
Figure 2 shows an attenuated antenna arrangement according to an embodiment of the invention.
Figure 3 is a plot of reflection with frequency for a resistive grid.

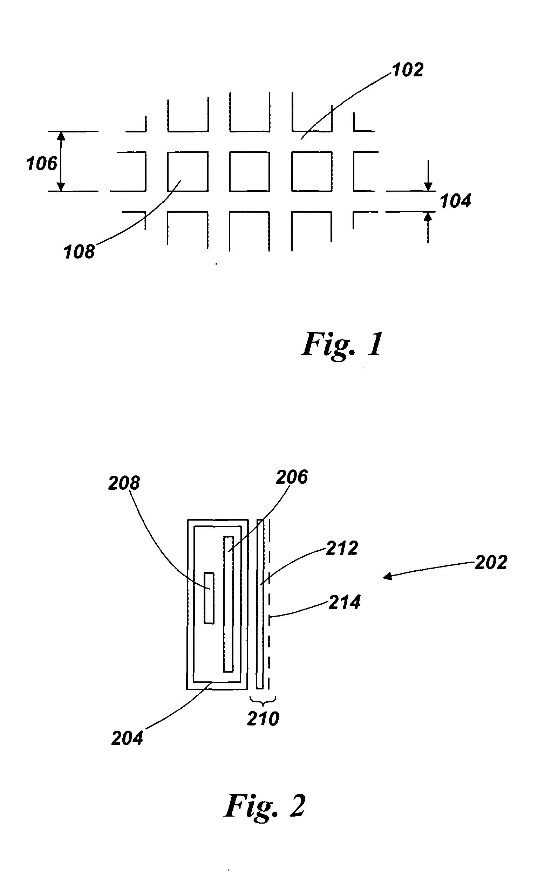

A resistive pattern is shown in Figure 1 in the form of a series of intersecting resistive lines 102. The lines have a thickness 104 of approximately 0.5mm and spacing 106 of approximately 2mm. The lines are separated by non conducting areas 108. The area and external shape of the pattern is selected according to the shape and beam pattern of the antenna/reader with which it is designed to operate. Typically the pattern will extend across the majority of the antenna/reader, having a similar shaped outline.

The frequency response of the device can be tailored by variation of the grid spacing. The degree of attenuation can be selected by variation of the volume of ink (track width and track thickness) and/or the conductivity/resistivity of the ink.

Referring to Figure 2, an RFID reader system is illustrated schematically at 202, and generally comprises an outer plastic casing 204 which houses an antenna element 106 and control electronics 208. The housing has a planar configuration, measuring approximately 250x250x35mm. The antenna element may be a patch antenna, loop antenna or other type of antenna, but in many readers, a generally planar geometry is preferred. The transmit antenna of the reader system (reader systems may have a separate receive antenna, or a single antenna can be used to both transmit and receive) will generally be designed to transmit radiation in a desired narrow band about a centre frequency, for example 866MHz in Europe and 915MHz in the US in a characteristic radiation pattern dependent on the antenna geometry. A typical radiation pattern will comprise a forward facing main beam, and possibly a number of side lobes.

The attenuating element 210 comprises a thin sheet polymer substrate 212 onto which is deposited a pattern 214 of resistive ink (shown as dashed line). The ink is a carbon loaded ink, the resulting pattern providing a number of resistive tracks. In this example element 210 is formed by screenprinting. The element 210 is approximately 0.2mm in thickness (the thickness is exaggerated in the figure for ease of view), and is attached to the front face of the outer housing of the reader system, so as to be in close proximity to the antenna 206. The element will typically be arranged substantially perpendicular to the axis of the main beam, such that the majority of the energy of the antenna is incident on the conductive pattern. With element 210 in close proximity to the antenna, both the main lobes and side lobes of the beam will typically be attenuated.

The element may be attached to the housing using any available suitable adhesive, or the element may have an adhesive backing on the rear face of the substrate for this purpose. Alternatively the element may be provided with one or more mounting clips or releasable fastening arrangement to provide a device which can be attached and readily detached for subsequent re-use on the same or another antenna. The element can be flexible so as to accommodate any possible curvature or irregularity of the housing, for example in thin film form, however the element could equally be imparted with a degree of structural stiffness if for example a 'clip on' version is required to maintain its shape when not attached to an antenna. Precise alignment of the element is not necessary for normal operation of the device, and affixing (and detaching) of the element can be made extremely quick and simple, no special skill being required.

Alternatively the pattern of resistive ink 214 may be deposited directly onto the antenna/reader housing 204.

The element results in attenuation of the energy transmitted in the desired operational frequency band of the antenna. The proportion of energy which is reflected can be determined by the pattern geometry and material make-up as noted above, and is typically selected according to the desired level of sensitivity or performance of the antenna and hence the reader system. For example, if it is desired to reduce the read range considerably, a pattern is selected which results in a large proportion of the energy at the desired frequency of operation being reflected. Attenuation will usually be such that a proportion of the radiation of the desired frequency band is transmitted through the pattern, which proportion still allows the RFID system to operate, albeit at a reduced range or sensitivity.

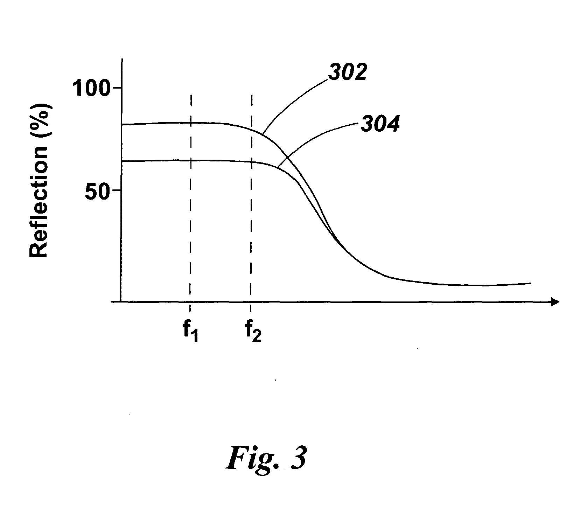

A graph of attenuation performance is shown in Figure 3. The graph shows the percentage of incident energy reflected as a function of the frequency of incident energy. There is negligible loss involved, and so reflection in the graph will be substantially the reciprocal of transmission. It can be seen that the traces are similar in form to a high pass FSS (frequency selective surface).

Trace 302 shows the characteristics of a device designed to operate at a central frequency f₁, and approximately 75% of incident energy at this frequency is reflected, resulting in approximately 6dB of power attenuation. It is noted that the device has a flat response up to frequency f₂, which is to say that the device results in substantially no frequency selective filtering in a desired band about the central frequency of operation. Trace 304 shows lesser reflection - approximately 60% - equating to approximately 4dB power attenuation. This change in reflectivity can be achieved by increasing the track thickness or the track width of the lines in the grid pattern. Alternatively the resistivity of the ink could be increased.

In an example designed for UK RFID applications, f₁ could be 866MHz, and f₂ approximately 900MHz. If it is desired to change the desired operating frequency to accommodate an RFID system in Australia for example, f1 could be changed to 915MHz, and F2 to approximately 1 GHz say. This can be achieved by decreasing the grid spacing.

It will be understood that the present invention has been described above purely by way of example, and modification of detail can be made within the scope of the invention.

Each feature disclosed in the description, and (where appropriate) the claims and drawings may be provided independently or in any appropriate combination.

## Claims

1. A device for attenuating electromagnetic radiation in a frequency band in which transmission is desired comprising
a generally planar substrate, and
a resistive pattern arranged on said substrate, said resistive pattern adapted to reflect a proportion of incident radiation in said desired transmission band.

2. A device according to Claim 1, wherein the transmission band is within the radio frequency range.

3. A device according to any preceding claim, wherein the transmission band lies within the range 0.8 to 1 GHz.

4. A device according to any preceding claim, wherein said device provides greater than or equal to 1dB attenuation

5. A device according to any preceding claim, wherein the device provides less than or equal to 10dB attenuation

6. A device according to any preceding claim, wherein said resistive pattern is carbon based.

7. A device according to any preceding claim, wherein the surface resistance of said resistive pattern is substantially 70 Ohms/square.

8. A device according to any preceding claim, wherein the device has a thickness less than or equal to 1 mm.

9. A transducer arrangement for transmitting electromagnetic radiation in a desired transmission band, said arrangement comprising
an antenna for producing electromagnetic radiation in said transmission band, and
a substantially planar attenuator comprising a resistive pattern arranged adjacent to said antenna such that radiation in said desired transmission band is incident thereon,
wherein said resistive pattern is adapted to reflect a proportion of said incident radiation in said desired transmission band.

10. A transducer arrangement according to Claim 9, wherein said resistive pattern is located within the near field of said antenna.

11. A transducer arrangement according to Claim 9 or Claim 10, wherein the resistive pattern is located less than or equal to 100mm from said antenna.

12. A transducer arrangement according to any one of Claims 9 to 11, wherein said antenna includes an outer housing and said resistive pattern is located on said housing.

13. A method for attenuating an antenna producing radiation in a defined frequency band, said method comprising:
providing a patterned resistive element adapted to reflect a proportion of incident radiation in the defined frequency band, and
locating said element adjacent to said antenna so as to allow a controlled proportion of radiation in said defined band to be transmitted beyond said element.

14. A method according to Claim 13, wherein the antenna includes an outer housing, and wherein the patterned resistive element is located on said housing.

15. A method according to Claim 13 or Claim 14, wherein the patterned resistive element is located over the main lobe of the beam pattern of said antenna.
